# EUROPEAN PATENT APPLICATION

(11) **EP 4 432 641 A1**
(43) Date of publication of application: **18.09.2024**
(21) Application number: 24162557.3
(22) Date of filing: 11.03.2024
(51) Int. Cl.: H04M 9/02

(54) **INFORMATION PROCESSING APPARATUS AND METHOD FOR CALLING**

(30) Priority: 14.03.2023 JP 2023039507
(71) Applicant: Panasonic Intellectual Property Management Co., Ltd., Osaka-shi, Osaka 571-0057 (JP)
(72) Inventor: TAKAHASHI, Takeshi, Osaka, 571-0057 (JP)
(74) Representative: Eisenführ Speiser

(57) **Abstract**

An information processing apparatus includes a receiver configured to receive, from a terminal of a visitor, identification information for identifying a building and position information of the terminal of the visitor, a controller configured to determine whether the terminal of the visitor is positioned within a predetermined range from the building based on position information of the building related to the identification information and the position information of the terminal of the visitor, and a transmitter configured to transmit, to the terminal of the visitor, first image data for calling a terminal of a dweller of the building, the calling to be performed by the visitor, when the terminal of the visitor is positioned within the predetermined range from the building.

## Description

### Technical Field

The present disclosure relates to an information processing apparatus and a method for calling.

### Background Art

Multifamily housing is not necessarily provided with a calling apparatus configured to call a dweller at a location such as, for example, an entrance on the first floor. In this case, a visitor goes to a dwelling as a visiting destination in the multifamily housing and operate, for example, a calling apparatus provided in front of a front door to call the dweller.

A related-art intercom system has been proposed. This intercom system allows an operation to call a master unit in a dwelling to be performed with a cellular phone (see PTL 1).

### Citation List

### Patent Literature

### PTL 1

Japanese Patent Application Laid-Open No. 2009-232421

### Summary of Invention

### Technical Problem

When the dweller of the visiting destination is not at home, the visitor goes to a location in front of the dwelling of the multifamily housing only to find his or her effort wasted. His or her effort is wasted more when the visiting destination is on an upper floor. Accordingly, an apparatus is desired with which the visitor can easily call the dweller of the visiting destination.

Non-limiting examples of the present disclosure contribute to provision of an information processing apparatus and a method for calling that allow a visitor to easily call a dweller of a visiting destination.

### Solution to Problem

An information processing apparatus according to one example of the present disclosure includes: a receiver configured to receive, from a terminal of a visitor, identification information for identifying a building and position information of the terminal of the visitor; a controller configured to determine whether the terminal of the visitor is positioned within a predetermined range from the building, based on position information of the building related to the identification information and the position information of the terminal of the visitor; and a transmitter configured to transmit, to the terminal of the visitor, first image data for calling a terminal of a dweller of the building, the calling being performed by the visitor, when the terminal of the visitor is positioned within the predetermined range from the building.

An information processing apparatus according to one example of the present disclosure includes: a transmitter configured to transmit, in response to a request from a terminal of a visitor, image data of a map image to be displayed in the terminal of the visitor and information for displaying, on the map image, a position image indicating a position of a building to be visited by the visitor; a receiver configured to receive, from the terminal of the visitor, identification information for identifying the building related to the position image selected by the visitor and position information of the terminal of the visitor; and a controller configured to determine whether the terminal of the visitor is positioned within a predetermined range from the building based on position information of the building related to the identification information and the position information of the terminal of the visitor, in which the transmitter transmits, to the terminal of the visitor, image data for calling a terminal of a dweller of the building, the calling to be performed by the visitor, when the terminal of the visitor is positioned within the predetermined range from the building.

An information processing apparatus according to one example of the present disclosure includes: a transmitter configured to transmit, in response to a request from a terminal of a visitor, image data of a map image to be displayed in the terminal of the visitor and information for displaying, on the map image, a position image indicating a position of a building to be visited by the visitor; and a receiver configured to receive identification information for identifying the building related to the position image selected by the visitor, in which the transmitter transmits, to the terminal of the visitor, image data for calling a terminal of a dweller of the building corresponding to the identification information, the calling being performed by the visitor.

A calling method according to one example of the present disclosure includes: receiving, by an information processing apparatus, from a terminal of a visitor, identification information for identifying a building and position information of the terminal of the visitor; determining, by the information processing apparatus, whether the terminal of the visitor is positioned within a predetermined range from the building based on position information of the building related to the identification information and the position information of the terminal of the visitor; and transmitting, by the information processing apparatus, to the terminal of the visitor, image data for calling a terminal of a dweller of the building, when the terminal of the visitor is positioned within the predetermined range from the building, the calling being performed by the visitor.

A calling method according to one example of the present disclosure includes: transmitting, by an information processing apparatus, in response to a request from a terminal of a visitor, image data of a map image to be displayed in the terminal of the visitor and information for displaying, on the map image, a position image indicating a position of a building to be visited by the visitor; receiving, by the information processing apparatus, from the terminal of the visitor, identification information for identifying the building related to the position image selected by the visitor and position information of the terminal of the visitor; and determining, by the information processing apparatus, whether the terminal of the visitor is positioned within a predetermined range from the building based on position information of the building related to the identification information and the position information of the terminal of the visitor, in which image data for calling a terminal of a dweller of the building is transmitted to the terminal of the visitor, when the terminal of the visitor is positioned within the predetermined range from the building, the calling being performed by the visitor.

A calling method according to one example of the present disclosure includes: transmitting, by an information processing apparatus, in response to a request from a terminal of a visitor, image data of a map image to be displayed in the terminal of the visitor and information for displaying, on the map image, a position image indicating a position of a building to be visited by the visitor; receiving, by the information processing apparatus, identification information for identifying the building related to the position image selected by the visitor; and transmitting, by the information processing apparatus, to the terminal of the visitor, image data for calling a terminal of a dweller of the building corresponding to the identification information, the calling being performed by the visitor.

It should be noted that general or specific embodiments may be implemented as a system, an apparatus, a method, an integrated circuit, a computer program, a storage medium, or any selective combination thereof.

### Advantageous Effects of Invention

According to one example of the present disclosure, the visitor can easily call the dweller of the visiting destination.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating an outline of a calling system according to embodiment 1;
FIG. 2 is a diagram illustrating an example of a configuration of the calling system;
FIG. 3 is a diagram illustrating an example of a block configuration of an information processing apparatus;
FIG. 4 is a diagram illustrating an example of a block configuration of a terminal;
FIG. 5 is a diagram illustrating an example of a block configuration of a calling apparatus;
FIG. 6 is a diagram illustrating an example of a data configuration stored in a storage of the information processing apparatus;
FIG. 7 is a diagram illustrating an example of a screen displayed on a display of the terminal;
FIG. 8 is a diagram illustrating an example of a screen displayed on the display of the terminal;
FIG. 9 is a diagram illustrating an example of a screen displayed on the display of the terminal;
FIG. 10 is a diagram illustrating an example of a screen displayed on the display of the terminal;
FIG. 11 is a sequential diagram illustrating examples of operations of the calling system;
FIG. 12 is a sequential diagram illustrating examples of operations of the calling system;
FIG. 13 is a sequential diagram illustrating examples of operations of the calling system;
FIG. 14 is a diagram illustrating an example of a screen displayed on the display of the terminal in a case of a detached house;
FIG. 15 is a diagram illustrating an example of a screen displayed on the display of the terminal in the case of the detached house;
FIG. 16 is a diagram illustrating an example of a screen displayed on a display of a terminal held by a resident of the detached house;
FIG. 17 is a diagram illustrating an example of a screen displayed on a display of a different terminal of the resident of the detached house;
FIG. 18 is a diagram illustrating an example of a screen displayed on a display of a terminal according to embodiment 2;
FIG. 19 is a diagram illustrating an example of a screen displayed on the display of the terminal according to embodiment 2; and
FIG. 20 is a sequential diagram illustrating examples of operations of a calling system according to embodiment 2.

### Description of Embodiments

Embodiments of the present invention will be described below in detail with reference to the accompanying drawings as appropriate. It is, however, noted that a description made in detail more than necessary is omitted in some cases. For example, a detailed description of an already well-known item and a duplicate description of substantially the same configuration are omitted in some cases. The reason for this is to prevent the following description from being unnecessarily redundant and allow a person skilled in the art to readily understand the present disclosure.

The accompanying drawings and the following descriptions are provided to allow a person skilled in the art to fully understand the present disclosure and are not intended to limit the subject set forth in the appended claims.

### <Embodiment 1> <Outline of Calling System>

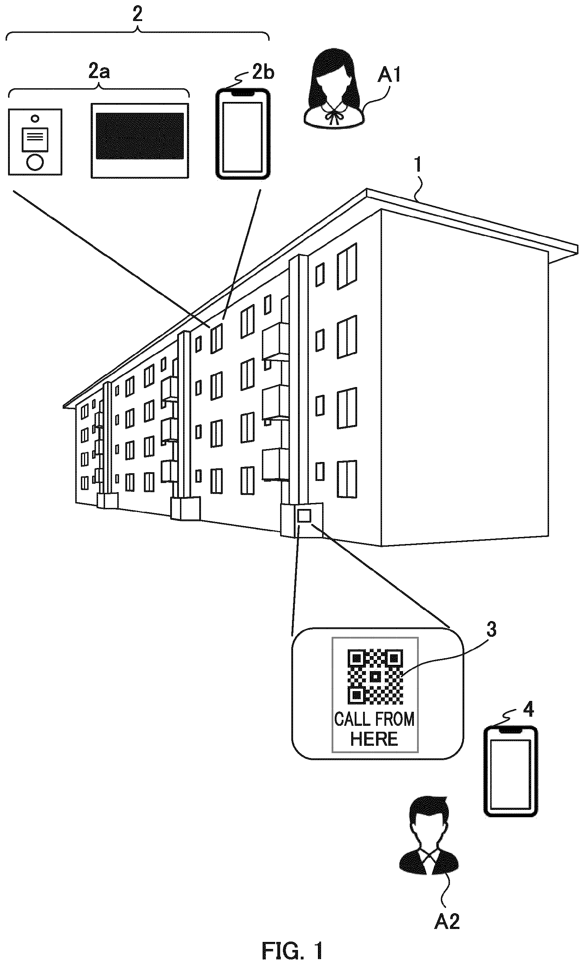

FIG. 1 is a diagram illustrating an outline of a calling system according to embodiment 1. Multifamily housing 1 illustrated in FIG. 1 is not provided with a calling apparatus configured to call residents of individual dwellings at a predetermined location such as, for example, an entrance. Multifamily housing 1 includes the calling apparatus at, for example, each of the dwellings.

Calling apparatus 2a illustrated in FIG. 1 is installed at a dwelling of resident A1 of multifamily housing 1. Calling apparatus 2a is an intercom that includes, for example, a slave unit installed in front of a front door and a master unit installed in the dwelling and configured to communicate with the slave unit. The master unit is, for example, connected to a public network such as the Internet to communicate with a terminal such as a smartphone or a cellular phone.

Terminal 2b is held by resident A1 of multifamily housing 1. Terminal 2b is, for example, a smartphone, a cellular phone, or the like usable for a telephone conversation.

It is sufficient that resident A1 of multifamily housing 1 be able to perform the telephone conversation with home-deliverer A2. Thus, resident A1 has to have only one of calling apparatus 2a and terminal 2b. Hereinafter, when calling apparatus 2a and terminal 2b are not distinguished from each other, calling apparatus 2a or terminal 2b may be simply referred to as terminal 2.

Identification image 3 includes (represents) identification information identifying multifamily housing 1. Identification image 3 may be, for example, a code image such as a one-dimensional code or a two-dimensional code.

Identification image 3 is posted (provided) at or around multifamily housing 1. For example, identification image 3 is posted on an external wall of multifamily housing 1 or on a predetermined structure such as a notice board installed in premises of multifamily housing 1.

The identification information represented by identification image 3 and identifying multifamily housing 1 is related to position information indicating the position of the multifamily housing in an information processing apparatus, which will be described later. For example, the position information such as the latitude and the longitude of the multifamily housing is associated with the identification information at the information processing apparatus.

Terminal 4 is held by home-deliverer A2. Terminal 4 is, for example, a smartphone, a cellular phone, or the like usable for the telephone conversation. Terminal 4 includes a position obtaining apparatus configured to obtain the position of terminal 4 such as, for example, a global positioning system (GPS). Terminal 4 also includes reading apparatus configured to read identification image 3 such as a camera.

An application (program) for operating in the calling system is implemented in terminal 2 of resident A1 of multifamily housing 1. For example, resident A1 of multifamily housing 1 operates terminal 2 to access a homepage of a business operator providing the calling system and downloads the application for the calling system to terminal 2.

For example, an application used to browse Web sites such as a browser is implemented in terminal 4 of home-deliverer A2.

### <Configuration of Calling System>

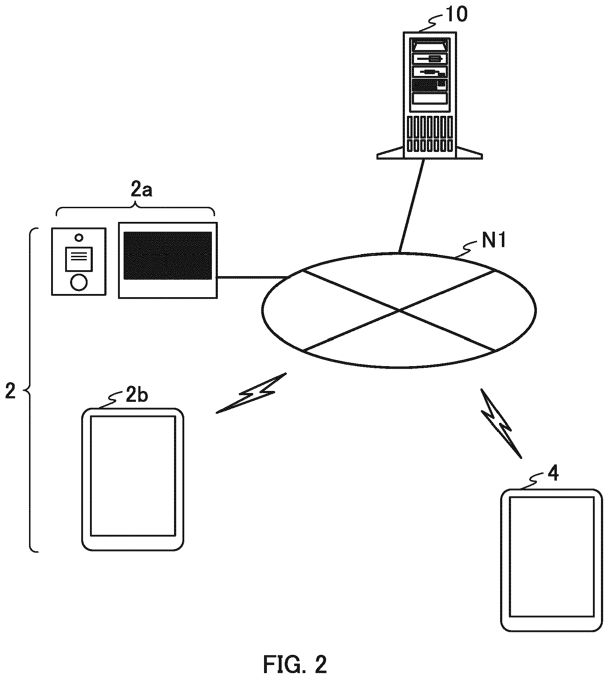

FIG. 2 is a diagram illustrating an example of a configuration of the calling system. Referring to FIG. 2, the same elements as those in FIG. 1 are denoted by the same reference numerals.

As illustrated in FIG. 2, the calling system includes information processing apparatus 10 and terminals 2 and 4 illustrated in FIG. 1. Information processing apparatus 10 and terminals 2 and 4 communicate with each other via network N1 such as a wireless communication network of the third generation (3G), the fourth generation (4G) or the fifth generation (5G) and the Internet.

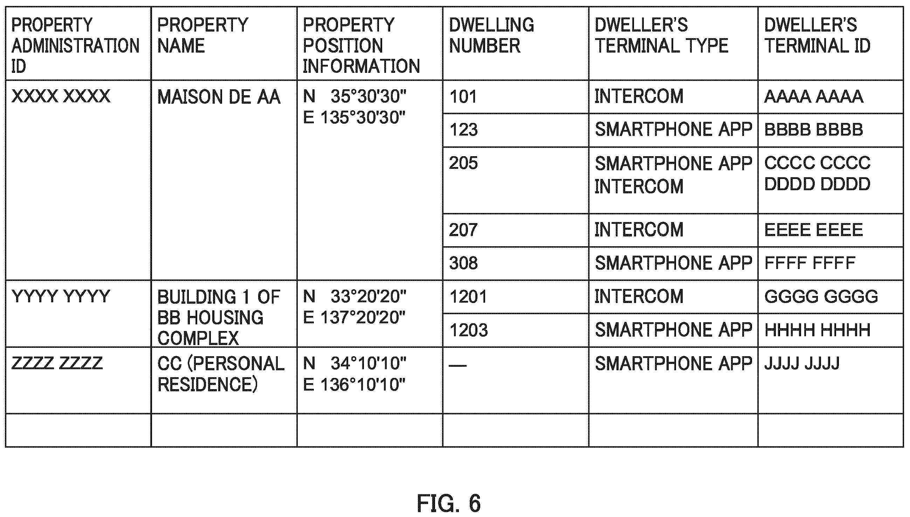

Examples of information processing apparatus 10 include a server. As described above, information processing apparatus 10 stores the identification information of multifamily housing 1 and the position information of multifamily housing 1 with both the information associated with each other. Although it will be described later, information processing apparatus 10 stores a dwelling number of multifamily housing 1 and identification information identifying terminal 2 with both the information associated with each other (see FIG. 6).

### <Outline of Operations of Calling System>

Operations of the calling system are briefly described. When delivering a home-delivery package to resident A1 of multifamily housing 1, home-deliverer A2 captures a picture of identification image 3 with the camera of terminal 4. Terminal 4 transmits, to information processing apparatus 10, identification information (identification information of multifamily housing 1) represented by identification image 3 having been captured and position information of terminal 4.

Based on the position information of terminal 4 and the position information of multifamily housing 1 associated with the identification information of multifamily housing 1, information processing apparatus 10 determines whether terminal 4 is positioned within a certain range (within a certain distance) from multifamily housing 1. In other words, information processing apparatus 10 determines whether home-deliverer A2 holding terminal 4 is positioned within the certain range from multifamily housing 1.

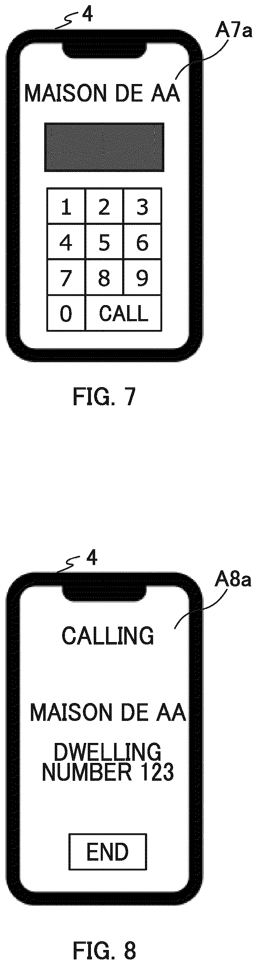

When information processing apparatus 10 determines that terminal 4 is positioned within the certain range from multifamily housing 1, information processing apparatus 10 displays, on terminal 4, a screen for calling resident A1 of multifamily housing 1 (for example, a screen for inputting the dwelling number of multifamily housing 1) (see FIG. 7). In contrast, when information processing apparatus 10 determines that terminal 4 is not positioned within the certain range from multifamily housing 1, information processing apparatus 10 displays a screen, on terminal 4, indicating that resident A1 of multifamily housing 1 cannot be called.

That is, information processing apparatus 10 enables calling of resident A1 of multifamily housing 1 when terminal 4 is positioned near multifamily housing 1. This can suppress a trouble of, for example, calling resident A1 of multifamily housing 1 from a different location when identification image 3 is moved to the different location without a permit.

Home-deliverer A2 inputs the dwelling number of resident A1 of a home-delivery destination on a call dispatching screen displayed on a screen of terminal 4. Terminal 4 transmits the input dwelling number to information processing apparatus 10.

Information processing apparatus 10 receives the dwelling number having been input at terminal 4. Information processing apparatus 10 calls terminal 2 of the received dwelling number. Upon receiving a response from terminal 2, information processing apparatus 10 establishes a communication path between terminal 2 and terminal 4. Information processing apparatus 10 does not establish a telephone conversation circuit of a cellular phone system such as the third generation partnership project (3GPP) but establishes a communication path of a data circuit (data communication path) of a public network such as the Internet.

When the communication path is established between terminal 2 and terminal 4, home-deliverer A2 holding terminal 4 can perform the telephone conversation with resident A1 of the home-delivery destination holding terminal 2. For example, home-deliverer A2 can ask resident A1 of the home-delivery destination whether resident A1 is at home.

Due to the operation having been described, home-deliverer A2 can easily call resident A1 of multifamily housing 1 by using terminal 4 in multifamily housing 1 without a calling apparatus at the entrance.

Furthermore, the calling system enables calling of resident A1 of multifamily housing 1 when terminal 4 is positioned near multifamily housing 1. Accordingly, resident A1 of multifamily housing 1 can be safely called by home-deliverer A2.

Furthermore, since home-deliverer A2 can easily call resident A1 of multifamily housing 1 by using terminal 4, home-deliverer A2 can deliver a home-delivery package after confirming that resident A1 of multifamily housing 1 is at home. Thus, waste of work is suppressed. For example, the following waste of home-deliverer's work occurring when resident A1 of the home-delivery destination is not at home is suppressed: "the home-deliverer calls the resident of the home-delivery destination while carrying a home-delivery package and returns to a home-delivery vehicle while carrying the home-delivery package again".

Furthermore, since terminal 4 of home-deliverer A2 communicates with terminal 2 by using the data circuit, cost of the telephone conversation can be suppressed.

Furthermore, since the calling system can be built by implementing the application in terminal 2 of the resident of multifamily housing 1 and implementing the browser in terminal 4 of home-deliverer A2, an initial cost can be suppressed.

### <Block Diagram>

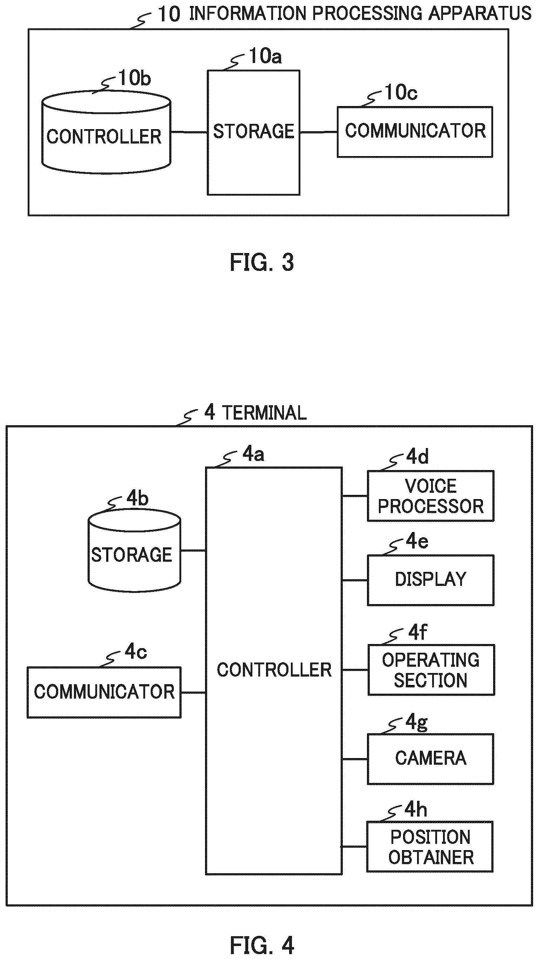

FIG. 3 is a diagram illustrating an example of a block configuration of information processing apparatus 10. As illustrated in FIG. 3, information processing apparatus 10 includes controller 10a, storage 10b, and communicator 10c.

Controller 10a is configured to control the entirety of information processing apparatus 10. Controller 10a may include, for example, a central processing unit (CPU).

Storage 10b is configured to store a program for causing controller 10a to operate. Furthermore, storage 10b is configured to store data for performing a calculation process, performed by the controller 10a, and data for controlling, performed by the controller 10a, sections connected to controller 10a. Storage 10b may include storage apparatuses such as a random access memory (RAM), a read only memory (ROM), a flash memory, and a hard-disk drive (HDD).

Communicator 10c is connected to network N1 and configured to communicate with apparatuses connected to network N1.

FIG. 4 is a diagram illustrating an example of a block configuration of terminal 4. As illustrated in FIG. 4, terminal 4 includes controller 4a, storage 4b, communicator 4c, voice processor 4d, display 4e, operation section 4f, camera 4g, and position obtainer 4h.

Controller 4a is configured to control the entirety of terminal 4. Controller 4a may include, for example, a CPU.

Storage 4b is configured to store a program for causing controller 4a to operate. Furthermore, storage 4b is configured to store data for performing a calculation process, performed by controller 4a and data used for controlling, performed by controller 4a, sections connected to controller 4a. Storage 4b may include storage apparatuses such as a RAM, a ROM, a flash memory, and an HDD.

Communicator 4c is connected to network N1 and configured to communicate with apparatuses connected to network N1.

Voice processor 4d is configured to convert analog voice data output from a microphone (not illustrated) incorporated in terminal 4 into digital voice data and output the digital voice data to controller 4a. Voice processor 4d is also configured to convert digital voice data output from controller 4a into analog voice data and output the analog voice data to a speaker (not illustrated) incorporated in terminal 4.

Display 4e is configured to display a video based on digital video data output from controller 4a. Display 4e is, for example, a liquid crystal display.

Operation section 4f is configured to accept an operation performed by the holder of terminal 4. Operation section 4f is configured to output information (a signal) corresponding to the accepted operation to controller 4a. Operation section 4f is, for example, a touch panel superposed on display 4e. Operation section 4f may be push buttons.

Camera 4g is configured to capture an image corresponding to control performed by controller 4a. Camera 4g is configured to output captured image data to controller 4a.

Position obtainer 4h is configured to receive, for example, a GPS signal and obtain the position of terminal 4 from the received GPS signal. Position obtainer 4h is configured to output the obtained position information of terminal 4 to controller 4a.

Since terminal 2b has a block configuration the same as or similar to that illustrated in FIG. 4, description of terminal 2b is omitted.

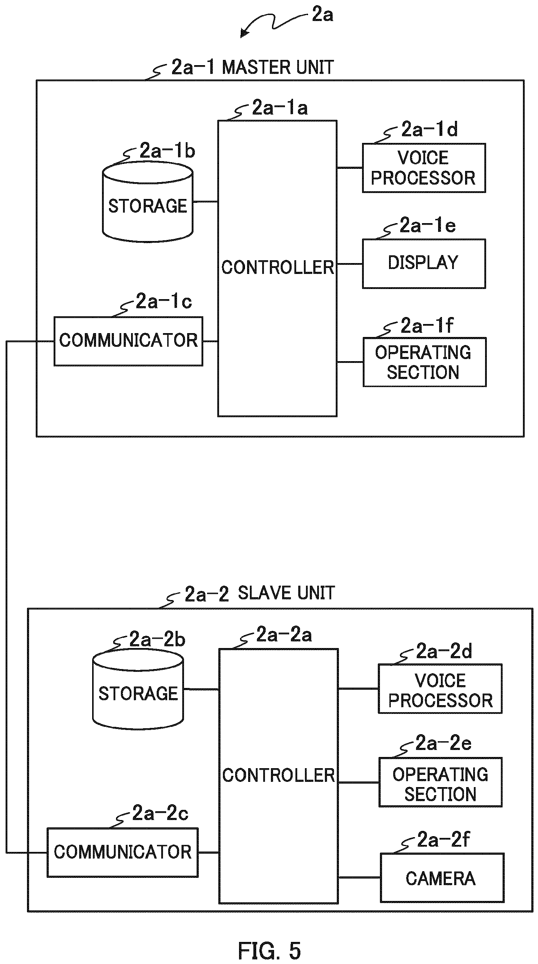

FIG. 5 is a diagram illustrating an example of a block configuration of calling apparatus 2a. As illustrated in FIG. 5, calling apparatus 2a includes master unit 2a-1 and slave unit 2a-2.

Master unit 2a-1 includes controller 2a-1a, storage 2a-1b, communicator 2a-1c, voice processor 2a-1d, display 2a-1e, and operation section 2a-1f.

Controller 2a-1a is configured to control the entirety of master unit 2a-1. Controller 2a-1a may include, for example, a CPU.

Storage 2a-1b is configured to store a program for causing controller 2a-1a to operate. Furthermore, storage 2a-1b is configured to store data for performing a calculation process, performed by controller 2a-1a, and data for controlling, performed by controller 2a-1a, sections connected to controller 2a-1a. Storage 2a-1b also configured to store image data captured by slave unit 2a-2. Storage 2a-1b may include storage apparatuses such as a RAM, a ROM, a flash memory, and an HDD.

Communicator 2a-1c is connected to slave unit 2a-2 in a wired manner or a wireless manner to communicate with slave unit 2a-2. Communicator 2a-1c is also connected to network N1 to communicate with apparatuses connected to network N1.

Voice processor 2a-1d is configured to convert analog voice data output from a microphone (not illustrated) incorporated in master unit 2a-1 into digital voice data and output the digital voice data to controller 2a-1a. Voice processor 2a-1d is also configured to convert digital voice data output from controller 2a-1a into analog voice data and output the analog voice data to a speaker (not illustrated) incorporated in master unit 2a-1.

Display 2a-1e is configured to display a video based on digital video data output from controller 2a-1a. Display 2a-1e is, for example, a liquid crystal display.

Operation section 2a-1f is configured to accept an operation performed by the resident of the dwelling in which master unit 2a-1 is installed. Operation section 2a-1f is configured to output information corresponding to the accepted operation to controller 2a-1a. Operation section 2a-1f may be, for example, a touch panel superposed on display 2a-1e. Operation section 2a-1f may be push buttons or the like.

Slave unit 2a-2 includes controller 2a-2a, storage 2a-2b, communicator 2a-2c, voice processor 2a-2d, operation section 2a-2e, and camera 2a-2f.

Controller 2a-2a is configured to control the entirety of slave unit 2a-2. Controller 2a-2a may include, for example, a CPU.

Storage 2a-2b is configured to store a program for causing controller 2a-2a to operate. Furthermore, Storage 2a-2b is also configured to store data for performing a calculation process, performed by controller 2a-2a, and data for controlling, performed by controller 2a-2a, sections connected to controller 2a-2a. Storage 2a-2b may include storage apparatuses such as a RAM, a ROM, a flash memory, and an HDD.

Communicator 2a-2c is connected to master unit 2a-1 in a wired manner or a wireless manner to communicate with master unit 2a-1.

Voice processor 2a-2d is configured to convert analog voice data output from a microphone (not illustrated) incorporated in slave unit 2a-2 into digital voice data and output the digital voice data to controller 2a-2a. Voice processor 2a-2d is also configured to convert digital voice data output from controller 2a-2a into analog voice data and output the analog voice data to a speaker (not illustrated) incorporated in slave unit 2a-2.

Operation section 2a-2e is configured to accept an operation performed by a visiting person. Operation section 2a-2e is configured to output information corresponding to the accepted operation to controller 2a-2a.

Camera 2a-2f is configured to capture an image of a space before slave unit 2a-2 corresponding to control performed by controller 2a-2a. For example, camera 2a-2f captures an image of the visiting person who has operated operation section 2a-2e. Camera 2a-2f is configured to output captured image data to controller 2a-2a.

### <Example of Data Configuration>

FIG. 6 is a diagram illustrating an example of a data configuration stored in storage 10b of information processing apparatus 10. As illustrated in FIG. 6, storage 10b of information processing apparatus 10 stores a property administration identification (ID), a property name, property position information, a dwelling number, a dweller's terminal type, and a dweller's terminal ID.

The property administration ID, the property name, and the property position information illustrated in FIG. 6 are stored to storage 10b when, for example, an administrator or an owner of the multifamily housing introduces a service of the calling system into the multifamily housing.

When the service of the calling system is introduced, for example, the administrator or the owner of the multifamily housing makes the introduction of the service of the calling system known to the residents of the multifamily housing. A resident who wants to use the service of the calling system accesses the homepage of the business operator providing the calling system and downloads the application for the calling system to his or her terminal. The dwelling number and the dweller's terminal type illustrated in FIG. 6 are registered by the resident of the multifamily housing who has downloaded the application.

The property administration ID is identification information for identifying the multifamily housing. The property administration ID is, for example, rendered into an image of a one-dimensional code or a two-dimensional code and posted at the multifamily housing (see identification image 3 of FIG. 1).

The property name is the name of the multifamily housing corresponding to the property administration ID.

The property position information is the position information of the multifamily housing corresponding to the property administration ID. The property position information is indicated with, for example, the latitude and the longitude.

The dwelling number is the dwelling number of the resident who has downloaded the application for the calling system to his or her terminal. For example, the resident who has downloaded the application for the calling system registers, in the calling system, the dwelling number of the multifamily housing where the resident is living in accordance with the downloaded application.

The dweller's terminal type is type information (model information) of the terminal of the resident who is to receive a call from the home-deliverer. For example, the resident who has downloaded the application for the calling system registers, in the calling system, the type (model) of the terminal used to receive a call from the home-deliverer in accordance with the downloaded application.

For example, the resident who has downloaded the application for the calling system registers, in the calling system, his or her smartphone when he or she wants to receive a call from the home-deliverer via the smartphone. The resident who has downloaded the application for the calling system registers, in the calling system, his or her intercom when he or she wants to receive a call from the home-deliverer via the intercom. The resident may register a plurality of models in the calling system.

The dweller's terminal ID is identification information provided to the terminal type registered by the resident. The dweller's terminal ID is provided by information processing apparatus 10 when the resident registers the terminal type in the calling system. Information processing apparatus 10 calls the terminal of the resident by using the dweller's terminal ID. The dweller's terminal ID may be, for example, a push ID.

The data listed in FIG. 6 is not necessarily stored in storage 10b of information processing apparatus 10. Alternatively, the data listed in FIG. 6 may be stored in, for example, another information processing apparatus such as a storage server connected to network N1. In the following, the data listed in FIG. 6 may be referred to as calling data.

### <Examples of Screens>

When calling resident A1 of multifamily housing 1, home-deliverer A2 captures identification image 3 assigned to multifamily housing 1 by using terminal 4. Terminal 4 transmits, to information processing apparatus 10, identification information (property administration ID) represented by identification image 3 having been captured and the position information of terminal 4.

Upon receiving, from terminal 4, the identification information represented by identification image 3 and the position information of terminal 4, information processing apparatus 10 refers to the calling data stored in storage 10b based on the received identification information and obtains the property position information of multifamily housing 1.

Based on the obtained property position information of multifamily housing 1 and the position information received from terminal 4, information processing apparatus 10 determines whether terminal 4 is positioned within the certain range from multifamily housing 1.

When information processing apparatus 10 determines that terminal 4 is not positioned within the certain range from multifamily housing 1, information processing apparatus 10 displays the screen indicating that resident A1 of multifamily housing 1 cannot be called on the display of terminal 4. When information processing apparatus 10 determines that terminal 4 is positioned within the certain range from multifamily housing 1, information processing apparatus 10 displays the screen for calling resident A1 of multifamily housing 1 on the display of terminal 4.

FIG. 7 is a diagram illustrating an example of a screen displayed on the display of terminal 4. Screen A7a illustrated in FIG. 7 is displayed when home-deliverer A2 captures identification image 3 of multifamily housing 1 by using terminal 4 and terminal 4 is positioned within the certain range from multifamily housing 1.

As indicated on screen A7a, the name of multifamily housing 1 identification image 3 of which has been captured by home-deliverer A2 is displayed on the display of terminal 4 held by home-deliverer A2. Furthermore, an image of a keypad for inputting the dwelling number of the resident of multifamily housing 1 is displayed on the display of terminal 4 held by home-deliverer A2. Home-deliverer A2 inputs, to terminal 4, the dwelling number of resident A1 of multifamily housing 1, that is, the dwelling number of the resident of the home-delivery destination and taps a "CALL" button.

When the "CALL" button is tapped, terminal 4 captures an image of the holder of terminal 4, that is, home-deliverer A2 with the camera of terminal 4. Terminal 4 transmits the captured image such as an image of the face of home-deliverer A2 to information processing apparatus 10. Information processing apparatus 10 transmits the received image to a terminal of a called party having been called by home-deliverer A2. The image captured by terminal 4 with the camera may be a moving image or a still image.

FIG. 8 is a diagram illustrating an example of a screen displayed on the display of terminal 4. For example, when the "CALL" button indicated on screen A7a illustrated in FIG. 7 is tapped, screen A8a illustrated in FIG. 8 is displayed on the display of terminal 4. As indicated on screen A8a, a calling screen is displayed on the display of terminal 4 held by home-deliverer A2. The display of terminal 4 displays the name of multifamily housing 1 and the dwelling number of resident A1 called by home-deliverer A2.

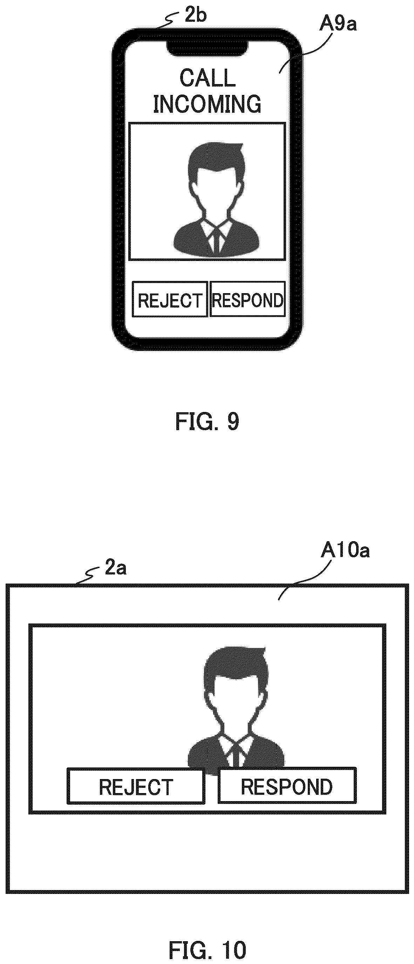

FIG. 9 is a diagram illustrating an example of a screen displayed on the display of terminal 2b. For example, when the "CALL" button indicated on screen A7a illustrated in FIG. 7 is tapped, screen A9a illustrated in FIG. 9 is displayed on the display of terminal 2b held by resident A1 of multifamily housing 1. The display of terminal 2b displays a camera image captured by the terminal of a caller calling residentA1 of multifamily housing 1, that is, terminal 4 of home-deliverer A2.

When looking at the camera image displayed on the display of terminal 2b, resident A1 holding terminal 2b taps a "RESPOND" button or a "REJECT" button. For example, resident A1 taps the "RESPOND" button when the camera image displayed on the display of terminal 2b is an image of the home-deliverer.

As described above, the display of terminal 2b displays the camera image of the caller. Accordingly, when looking at the camera image of the caller displayed on the display of terminal 2b, the holder of terminal 2b can determine whether to respond to or reject the call.

FIG. 10 is a diagram illustrating an example of a screen displayed on the display of calling apparatus 2a. For example, when the "CALL" button indicated on screen A7a illustrated in FIG. 7 is tapped, screen A10a illustrated in FIG. 10 is displayed on the display of calling apparatus 2a provided in the dwelling of resident A1 of multifamily housing 1. The display of calling apparatus 2a displays the camera image of the caller calling resident A1 of multifamily housing 1.

When looking at the camera image displayed on the display of calling apparatus 2a, resident A1 provided with calling apparatus 2a in his or her dwelling taps a "RESPOND" button or a "REJECT" button. For example, residentA1 taps the "RESPOND" button when the camera image displayed on the display of calling apparatus 2a is the image of the home-deliverer.

As described above, the display of calling apparatus 2a displays the camera image of the caller. Accordingly, when looking at the camera image of the caller displayed on the display of calling apparatus 2a, resident A1 provided with calling apparatus 2a in his or her dwelling can determine whether to respond to or reject the call.

### <Sequence>

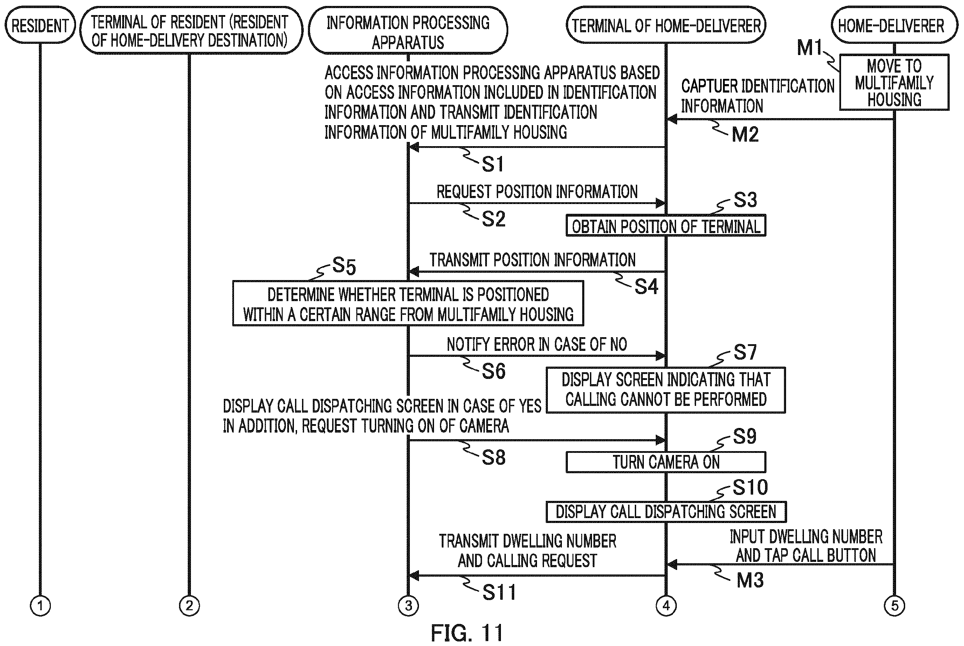

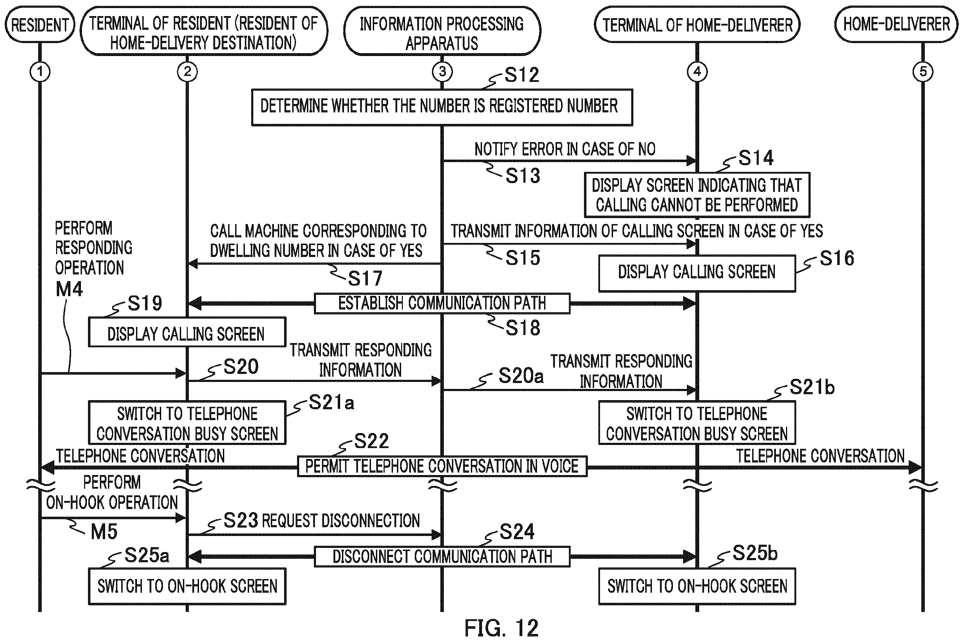

FIGS. 11 and 12 are sequential diagrams illustrating examples of the operations of the calling system. The sequence of FIG. 12 is continued at circled numbers illustrated in FIG. 11. FIGS. 11 and 12 also illustrate operations performed by home-deliverer A2 and resident A1 of multifamily housing 1.

For example, home-deliverer A2 drives the home-delivery vehicle loaded with the home-delivery package to move to multifamily housing 1 (M1).

Home-deliverer A2 captures identification image 3 such as a two-dimensional code posted at multifamily housing 1 with the camera of terminal 4 held by home-deliverer A2 (M2). Identification image 3 includes access information such as a uniform resource locator (URL) for accessing information processing apparatus 10 and the identification information such as the property administration ID of multifamily housing 1 (see FIG. 6).

Terminal 4 of home-deliverer A2 accesses information processing apparatus 10 based on the access information included in identification image 3 (S1). When accessing information processing apparatus 10, terminal 4 transmits the identification information of multifamily housing 1 included in identification image 3 to information processing apparatus 10 (S1).

Information processing apparatus 10 submits a request for the position information to terminal 4 having accessed to information processing apparatus 10 (S2).

In response to the request for the position information from information processing apparatus 10, terminal 4 obtains the position of terminal 4 based on the GPS signal (S3).

Terminal 4 transmits the obtained position information to information processing apparatus 10 (S4).

Based on the identification information (property administration ID) having been transmitted by terminal 4 in S1, information processing apparatus 10 refers to the calling data (see FIG. 6) and obtains the position information (property position information) corresponding to the identification information (property administration ID). Based on the position information (position information of multifamily housing 1) obtained by referring to the calling data and the position information having been transmitted by terminal 4 in S4, information processing apparatus 10 determines whether terminal 4 is positioned within the certain range from multifamily housing 1 (S5).

When information processing apparatus 10 determines that terminal 4 is not positioned within the certain range from multifamily housing 1 (in the case of NO), information processing apparatus 10 transmits information indicating an error to terminal 4 (S6). The information transmitted to terminal 4 by information processing apparatus 10 may be information such as a hyper text markup language (HTML) to display a Web page in the browser.

Terminal 4 receives the information indicating the error having been transmitted by information processing apparatus 10 in S6. Based on the received information, terminal 4 displays, on the display, the screen indicating that resident A1 of multifamily housing 1 cannot be called (S7). For example, terminal 4 displays, in the browser, the screen indicating that resident A1 of multifamily housing 1 cannot be called.

When information processing apparatus 10 determines that terminal 4 is positioned within the certain range from multifamily housing 1 (in the case of YES), information processing apparatus 10 transmits screen information for calling resident A1 of multifamily housing 1 to terminal 4 (S8). Furthermore, when information processing apparatus 10 determines that terminal 4 is positioned within the certain range from multifamily housing 1 (in the case of YES), information processing apparatus 10 submits a request to terminal 4 for, for example, turning on of the camera such as an in-camera (S8).

In response to the request for turning on of the camera in S8, terminal 4 turns on, for example, the in-camera of terminal 4 (S9).

Terminal 4 receives information of the calling screen having been transmitted by information processing apparatus 10 in S8. Based on the received information, terminal 4 displays, in the browser, the screen for calling residentA1 of multifamily housing 1 (see FIG. 7) (S10).

On the screen for calling resident A1 of multifamily housing 1 displayed on the display of terminal 4, home-deliverer A2 inputs the dwelling number of resident A1 of the home-delivery destination and taps the call button (M3).

In response to the operation performed by home-deliverer A2 in M3, terminal 4 transmits the dwelling number and a calling request to information processing apparatus 10 (S 11).

Information processing apparatus 10 receives the dwelling number having been transmitted by terminal 4 in S11. Information processing apparatus 10 determines whether the received dwelling number is stored in the calling data (see FIG. 6) so as to be corresponding to the identification information (property administration ID) having been transmitted by terminal 4 in S1 (S12). That is, information processing apparatus 10 determines whether resident A1 of multifamily housing 1 registers the dwelling number in the calling system.

When information processing apparatus 10 determines that resident A1 of multifamily housing 1 does not register the dwelling number in the calling system (in the case of NO), information processing apparatus 10 transmits the information indicating the error to terminal 4 (S13).

Terminal 4 receives the information indicating the error having been transmitted by information processing apparatus 10 in S13. Based on the received information, terminal 4 displays, on the display, the screen indicating that resident A1 of multifamily housing 1 cannot be called (S14). For example, terminal 4 displays, in the browser, the screen indicating that resident A1 of multifamily housing 1 cannot be called.

When information processing apparatus 10 determines that resident A1 of multifamily housing 1 registers the dwelling number in the calling system (in the case of YES), information processing apparatus 10 transmits the information of the calling screen to terminal 4 (S15).

Terminal 4 receives the information of the calling screen having been transmitted by information processing apparatus 10 in S15. Based on the received information, terminal 4 displays, in the browser, the screen indicating that resident A1 of multifamily housing 1 is being called (see FIG. 8) (S16).

When information processing apparatus 10 determines that resident A1 of multifamily housing 1 registers the dwelling number in the calling system (in the case of YES), information processing apparatus 10 refers to the calling data (see FIG. 6) and obtains the dweller's terminal ID corresponding to the dwelling number having been transmitted by terminal 4 in S11. That is, information processing apparatus 10 obtains the ID of a machine at the called party corresponding to the dwelling number. Information processing apparatus 10 calls the terminal by using the obtained dweller's terminal ID (S17). Information processing apparatus 10 may perform the process in S17 before the process in S15.

In response to the calling process in S17, information processing apparatus 10 establishes (connects) a communication path (path) of the video and the voice between terminal 4 of home-deliverer A2 and terminal 2 of resident A1 of multifamily housing 1 (S18). At the time of the establishment of the communication path in S18, information processing apparatus 10 does not permit a telephone conversation in voice between terminal 2 and terminal 4 but transmits, to terminal 2, the image of the camera of terminal 4 having been turned on in S9.

In terminal 2 of resident A1 of multifamily housing 1, the application for the calling system starts up in response to the calling process in S17, and a calling screen is displayed on the display (S19). The camera image of terminal 4 having been turned on in S9, that is, the camera image of terminal 4 of home-deliverer A2 calling terminal 2 is displayed on the calling screen (see FIGS. 9 and 10).

That is, at the time of S19, the calling screen (see FIG. 8) is displayed on the display of terminal 4 held by home-deliverer A2. In contrast, the image of home-deliverer A2 calling resident A1 (see FIGS. 9 and 10) is displayed in terminal 2 of resident A1 of multifamily housing 1.

Resident A1 of multifamily housing 1 holding terminal 2 performs a responding operation (M4). For example, resident A1 of multifamily housing 1 holding terminal 2 performs the responding operation when recognizing that a calling party is a home-deliverer based on the image of the face displayed on the calling screen.

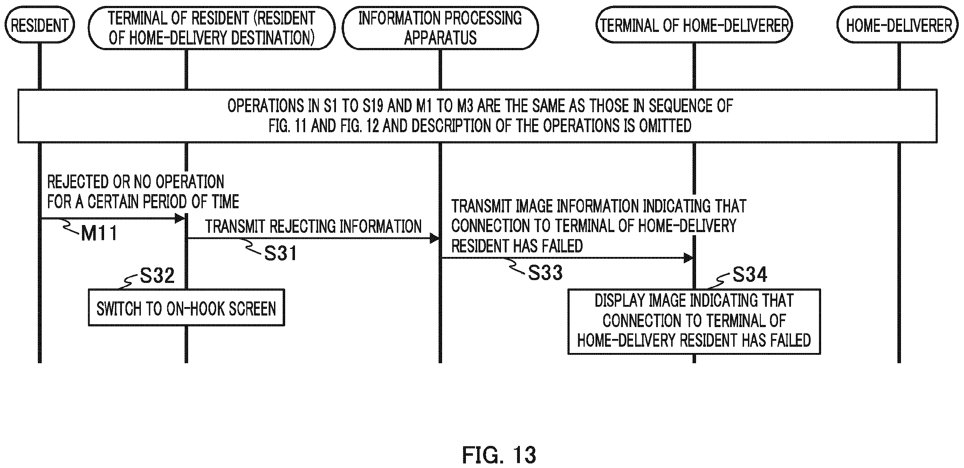

Operation to be performed when resident A1 of multifamily housing 1 holding terminal 2 does not perform the responding operation (in a case of performing a refusing operation) will be described with reference to a sequence of FIG. 13.

In response to the responding operation in M4, terminal 2 transmits responding information to information processing apparatus 10 (S20). In response to the transmission of the responding information in S20, information processing apparatus 10 transmits the responding information to terminal 4 of home-deliverer A2 (S20a).

Based on the responding information having been transmitted by terminal 2 in S20, information processing apparatus 10 switches the calling screen displayed in terminal 2 and terminal 4 to a telephone conversation busy screen (S21a and S21b).

Information processing apparatus 10 permits the telephone conversation in voice between terminal 2 and terminal 4 (S22). Due to the operations having been described, the telephone conversation between home-deliverer A2 and resident A1 of multifamily housing 1 is enabled. Information processing apparatus 10 may transmit the image captured by the camera of terminal 4 to terminal 2 after permitting the telephone conversation in voice.

Resident A1 of multifamily housing 1 holding terminal 2 performs an on-hook operation (M5).

In response to the on-hook operation, terminal 2 transmits a disconnection request to information processing apparatus 10 (S23).

In response to the disconnection request having been transmitted by terminal 2 in S23, information processing apparatus 10 disconnects the communication path between terminal 2 and terminal 4 (S24).

Although resident A1 of multifamily housing 1 holding terminal 2 performs the on-hook operation (M5) in the above description, home-deliverer A2 may perform the on-hook operation. Information processing apparatus 10 may disconnect the communication path between terminal 2 and terminal 4 in response to the on-hook operation performed by home-deliverer A2.

Terminal 2 and terminal 4 switch the displays to a telephone conversation termination screens in response to the disconnection of the communication path performed by information processing apparatus 10 in S24 (S25a and S25b).

FIG. 13 is a sequential diagram illustrating examples of the operations of the calling system. FIG. 13 illustrates a sequence when resident A1 of multifamily housing 1 holding terminal 2 does not perform the responding operation in M4 of FIG. 12. The operations in S1 to S19 and the operations in M1 to M3 having been described with reference to FIGS. 11 and 12 are the same or similar in the sequence of FIG. 13, and accordingly, the description of these operations are omitted.

Resident A1 of multifamily housing 1 holding terminal 2 performs a rejecting operation (M11). For example, resident A1 of multifamily housing 1 holding terminal 2 performs the rejecting operation when recognizing that the calling party is an unknown person based on the image of the face displayed on the calling screen (see FIGS. 9 and 10). Alternatively, for example, when resident A1 of multifamily housing 1 holding terminal 2 does not notice that terminal 2 is called, he or she does not perform any operation for a certain period of time (M11).

In response to the rejecting operation or the absence of operation for the certain period of time in M11, terminal 2 transmits rejecting information to information processing apparatus 10 (S31).

In response to the rejecting operation or the absence of operation for the certain period of time in M11, terminal 2 switches the calling screen displayed on the display to the on-hook screen (S32).

In response to the rejecting information having been transmitted by terminal 2 in S3 1, information processing apparatus 10 transmits screen information indicating that the connection to resident A1 of multifamily housing 1 has failed to terminal 4 of home-deliverer A2 (S33).

Terminal 4 held by home-deliverer A2 receives image information having been transmitted by information processing apparatus 10 in S33. Based on the received image information, terminal 4 displays an image indicating that the connection to terminal 2 of resident A1 has failed on the display of terminal 4 (S34).

### <Summarization of Embodiment 1>

As has been described, communicator 10c of information processing apparatus 10 receives, from terminal 4 of home-deliverer A2, the identification information for identifying multifamily housing 1 and the position information of terminal 4. Based on the position information of multifamily housing 1 related to the received identification information and the position information of terminal 4, controller 10a determines whether terminal 4 is positioned within a predetermined range from multifamily housing 1. When terminal 4 is positioned within the predetermined range from multifamily housing 1, communicator 10c transmits, to terminal 4, image data for calling terminal 2 of the resident of multifamily housing 1 performed by home-deliverer A2.

Accordingly, home-deliverer A2 can easily call residentA1 of multifamily housing 1 by transmitting the identification information of multifamily housing 1 and the position information of terminal 4 to information processing apparatus 10 by using terminal 4.

### <Variations> Variation 1

Although the resident of the multifamily housing is called in the above description, the technique disclosed herein can also be applied to a case of calling a resident of a detached house. For example, an identification image identifying a detached house may be posted on a structure such as an external wall or a gate of the detached house. In a case of the detached house, the property name or the dwelling number is not registered in the calling data. In the case of the detached house, the name of a registrant may be registered in the calling data.

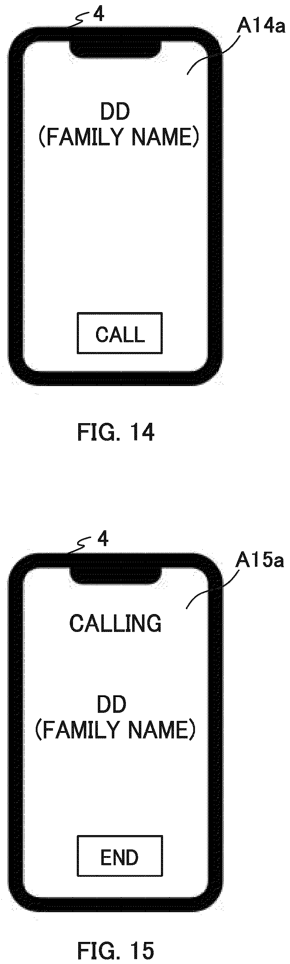

FIG. 14 is a diagram illustrating an example of a screen displayed on the display of terminal 4 in the case of the detached house. Screen A14a illustrated in FIG. 14 is displayed when home-deliverer A2 captures the identification image of the detached house by using terminal 4 and terminal 4 is positioned within a certain range from the detached house.

As indicated on screen A14a, the name (for example, the family name) of the resident of the detached house the identification image of which has been captured by home-deliverer A2 is displayed on the display of terminal 4 held by home-deliverer A2. Furthermore, a "CALL" button for calling the resident of the detached house is displayed on the display of terminal 4 held by home-deliverer A2. Home-deliverer A2 taps the "CALL" button for calling the resident (the resident of the home-delivery destination) of the detached house.

When the "CALL" button is tapped, terminal 4 captures an image of the holder of terminal 4, that is, home-deliverer A2 with the camera of terminal 4. Terminal 4 transmits the captured image such as an image of the face of home-deliverer A2 to information processing apparatus 10. Information processing apparatus 10 transmits the received image to a terminal of a called party having been called by home-deliverer A2.

FIG. 15 is a diagram illustrating an example of a screen displayed on the display of terminal 4. For example, when the "CALL" button indicated on screen A14a illustrated in FIG. 14 is tapped, screen A15a illustrated in FIG. 15 is displayed on the display of terminal 4. As indicated on screen A15a, a calling screen is displayed on the display of terminal 4 held by home-deliverer A2. The display of terminal 4 displays the family name of the resident called by home-deliverer A2.

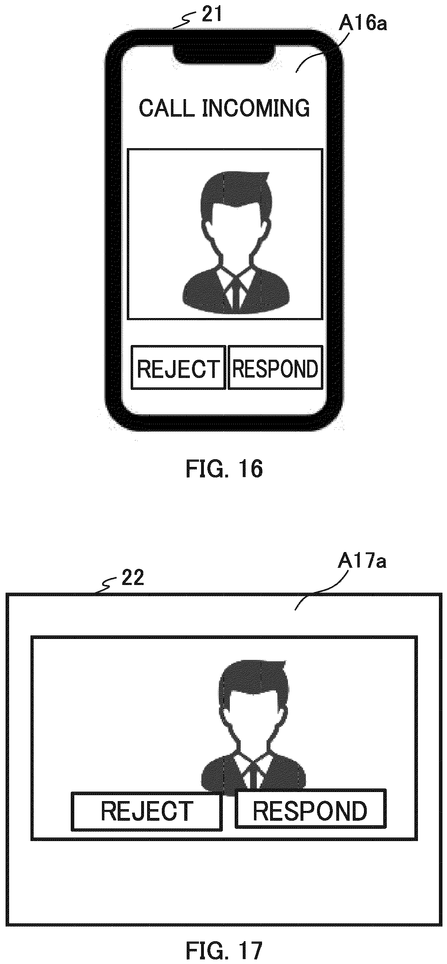

FIG. 16 is a diagram illustrating an example of a screen displayed on a display of a terminal held by the resident of the detached house. FIG. 16 illustrates terminal 21 such as a smartphone held by the resident of the detached house.

For example, when the "CALL" button indicated on screen A14a illustrated in FIG. 14 is tapped, screen A16a illustrated in FIG. 16 is displayed on the display of terminal 21 held by the resident of the detached house. The display of terminal 21 displays a camera image of the terminal of a caller calling the resident of the detached house, that is, terminal 4 of home-deliverer A2.

When looking at the camera image displayed on the display of terminal 21, the resident of the detached house holding terminal 21 taps a "RESPOND" button or a "REJECT" button. For example, the resident of the detached house taps the "RESPOND" button when the camera image displayed on the display of terminal 21 is an image of the home-deliverer.

As described above, the display of terminal 21 of the resident of the detached house displays the camera image of the caller. Accordingly, when looking at the camera image of the caller displayed on the display of terminal 21, the holder of terminal 21 can determine whether to respond to or reject the call.

FIG. 17 is a diagram illustrating an example of a screen displayed on a display of a different terminal of the resident of the detached house. FIG. 17 illustrates a calling apparatus 22 such as a master unit of an intercom provided in a house of the resident of the detached house.

For example, when the "CALL" button indicated on screen A14a illustrated in FIG. 14 is tapped, screen A17a illustrated in FIG. 17 is displayed on the display of calling apparatus 22. The display of calling apparatus 22 displays the camera image of the caller calling the resident of the detached house.

When looking at the camera image displayed on the display of calling apparatus 22, the resident provided with calling apparatus 22 in his or her house taps a "RESPOND" button or a "REJECT" button. For example, the resident taps the "RESPOND" button when the camera image displayed on the display of calling apparatus 22 is the image of the home-deliverer.

As described above, the display of calling apparatus 22 displays the camera image of the caller. Accordingly, when looking at the camera image of the caller displayed on the display of calling apparatus 22, the resident provided with calling apparatus 22 in his or her house can determine whether to respond to or reject the call.

### Variation 2

Although the application for the calling system is not implemented in terminal 4 of home-deliverer A2 in the above description (the call dispatching screen and the telephone conversation screen are displayed in the browser or the like), this is not limiting. The application for causing the calling system to operate may be implemented in terminal 4 of home-deliverer A2. The application for causing the calling system to operate may cause the display of terminal 4 of home-deliverer A2 to display the call dispatching screen and the telephone conversation screen.

### Variation 3

Although the image captured by the camera of the terminal of the calling party is displayed during the calling (call dispatching screen) in the above description, this is not limiting. When the responding operation is performed by the called party, the image captured by the camera of the terminal of the calling party may be displayed on the display of the terminal of the called party. In this case, information processing apparatus 10 may establish the communication path when receiving the responding information from the terminal of the called party (for example, receiving the responding information transmitted in S20 of FIG. 12).

### Variation 4

The image captured by the camera of terminal 4 may be displayed on the calling screen of terminal 4 held by home-deliverer A2 (FIGS. 8 and 15). Home-deliverer A2 can check whether the image of the face of home-deliverer A2 is transmitted to the terminal of the called party when looking at the image displayed on the calling screen.

### Variation 5

Although the calling party is the home-deliverer in the above description, this is not limiting. The calling party may be a visitor such as a friend. The home-deliverer may be called as a home-delivery business, a delivery personnel, a delivery business, or a calling person. The resident may be called as a dweller, a tenant, or a called person. The dwelling may be called as a house. The telephone conversation line may be referred to as a telephone line or a line based on a line switching method. The data line may be referred to as a line base on a line based on a packet exchange method.

### <Embodiment 2>

According to embodiment 2, a map is displayed on the display of terminal 4 of home-deliverer A2. In the map, the position of the multifamily housing being the delivery destination is displayed with, for example, a pin image. According to embodiment 2, for example, when the pin on the map is tapped, terminal 2 of resident A1 of the home-delivery destination can be called in the case where the position of terminal 4 of home-deliverer A2 is within the certain range from the tapped multifamily housing.

### <Examples of Screens>

Home-deliverer A2 starts up the application of the calling system implemented in terminal 4. Terminal 4 (the application) obtains the position information of terminal 4 based on, for example, the GPS signal. Terminal 4 transmits the obtained position information to information processing apparatus 10.

Based on the position information having been transmitted from terminal 4, information processing apparatus 10 transmits map information around terminal 4 to terminal 4. Furthermore, information processing apparatus 10 transmits, to terminal 4, a corresponding property list including information of the multifamily housing which exists around terminal 4 and in which the service of the calling system has been introduced. The corresponding property list may include, for example, the property administration ID and the property position information described with reference to FIG. 6.

The calling data listed in FIG. 6 is stored in storage 10b of information processing apparatus 10.

Based on the map information having been transmitted from information processing apparatus 10, terminal 4 displays a map image on the display. In so doing, based on the property position information in the corresponding property list having been transmitted from information processing apparatus 10, terminal 4 displays the pin image indicating the multifamily housing on the map.

That is, the map around terminal 4 (home-deliverer A2) is displayed on the display of terminal 4. In addition, the pin image indicating the position of the multifamily housing in which the service of the calling system has been introduced is displayed on the map.

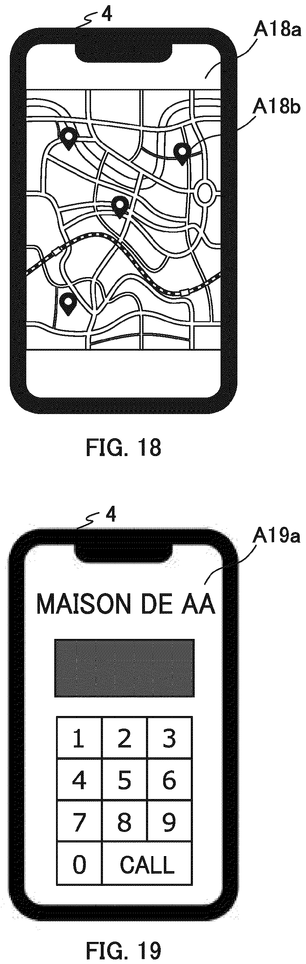

FIG. 18 is a diagram illustrating an example of a screen displayed on the display of terminal 4 according to embodiment 2. A screen A18a illustrated in FIG. 18 indicates a map displayed on the display of terminal 4 of home-deliverer A2. The map displayed on the display is a map of a region around the position of terminal 4 (home-deliverer A2). The positions of multifamily housings in which the service of the calling system has been introduced are displayed on the map with pin images A18b.

Home-deliverer A2 taps one of the pin images A18b displayed on the display to select the home-delivery destination to which home delivery will be performed thereafter. Terminal 4 transmits information about which pin has been selected by home-deliverer A2 to information processing apparatus 10. For example, terminal 4 transmits the property administration ID related to the pin image selected by home-deliverer A2 to information processing apparatus 10.

Information processing apparatus 10 refers to the calling data (see FIG. 6) and obtains the property name of multifamily housing 1 corresponding to the property administration ID having been transmitted by terminal 4. When the property name has been obtained, information processing apparatus 10 transmits, to terminal 4, the image of the call dispatching screen for calling resident A1 of the home-delivery destination.

FIG. 19 is a diagram illustrating an example of a screen displayed on the display of terminal 4 according to embodiment 2. For example, when pin image A18b displayed on screen A18a illustrated in FIG. 18 is tapped, screen A19a illustrated in FIG. 19 is displayed on the display of terminal 4.

As indicated on screen A19a, the name of multifamily housing 1 corresponding to pin image A18b having been tapped by home-deliverer A2 is displayed on the display of terminal 4 held by home-deliverer A2. Furthermore, the image of the keypad for inputting the dwelling number of the resident of multifamily housing 1 is displayed on the display of terminal 4 held by home-deliverer A2. Home-deliverer A2 inputs, to terminal 4, the dwelling number of resident A1 of multifamily housing 1, that is, the dwelling number of the resident of the home-delivery destination and taps the "CALL" button.

When the "CALL" button is tapped, terminal 4 captures the image of the holder of terminal 4, that is, home-deliverer A2 with the camera of terminal 4. Terminal 4 transmits the captured image such as an image of the face of home-deliverer A2 to information processing apparatus 10. Information processing apparatus 10 transmits the received image to the terminal of the called party having been called by the home-deliverer.

The image displayed on the display of the terminal of the called party is the same as or similar to the example of the screen described with reference to FIGS. 9 and 10, and description of this image is omitted.

### <Sequence>

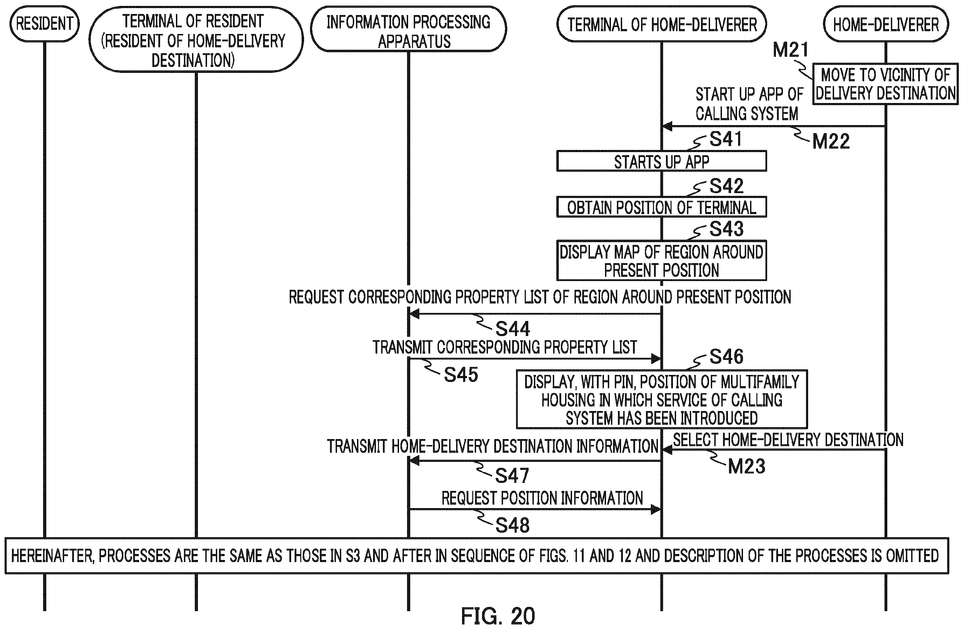

FIG. 20 is a sequential diagram illustrating examples of the operations of the calling system according to embodiment 2. FIG. 20 also illustrates operations performed by home-deliverer A2 and resident A1 of multifamily housing 1.

For example, home-deliverer A2 moves, in the home-delivery vehicle, to the vicinity of the delivery destination (M21).

Home-deliverer A2 operates terminal 4 to start up the application (APP) for the calling system (M22).

Terminal 4 starts up the application for the calling system in response to the starting operation in M22 (S41).

Based on, for example, the GPS signal, terminal 4 obtains the position information of terminal 4 (S42).

Terminal 4 displays, on the display, the map of a region around the position of the position information (around the present position of terminal 4) obtained in S42 (S43).

Terminal 4 may transmit the position information having been obtained in S42 to information processing apparatus 10. Information processing apparatus 10 may obtain the map information of the region around the position information having been received from terminal 4 and transmit the map information to terminal 4. Based on the map information having been transmitted from information processing apparatus 10, terminal 4 may display the map on the display.

Terminal 4 submits a request to information processing apparatus 10 for the corresponding property list of the region around the position information having been obtained in S42 (S44).

In response to the request in S44, information processing apparatus 10 transmits the corresponding property list to the terminal (S45).

Terminal 4 receives the corresponding property list having been transmitted by information processing apparatus 10 in S45. Based on the property position information in the received corresponding property list, terminal 4 displays, with the pin images, the positions of the multifamily housings in which the service of the calling system has been introduced on the map displayed on the display (S46).

For example, home-deliverer A2 taps one of the pin images on the map displayed on the display to select the home-delivery destination (M23).

Terminal 4 transmits the property administration ID (home-delivery destination information) related to the pin image tapped in the operation in M23 to information processing apparatus 10 (S47).

Information processing apparatus 10 submits a request for the position information to terminal 4 that has transmitted the home-delivery destination information to information processing apparatus 10 (S48).

Thereafter, processes are the same as or similar to the processes in and after S3 having been described with the sequence of FIGS. 11 and 12, and description of the processes is omitted. However, based on the property administration ID having been received in S47, information processing apparatus 10 refers to the calling data and obtains the corresponding property name or the like.

### <Summarization of Embodiment 2>

As has been described, in response to the request from terminal 4 of home-deliverer A2, communicator 10c of information processing apparatus 10 transmits image data of the map image displayed in terminal 4 and image data of the pin image displayed on the map image and indicating the position of the multifamily housing to which home-deliverer A2 is to visit. Communicator 10c receives, from terminal 4, the position information of the multifamily housing related to the pin image selected by home-deliverer A2 and the position information of terminal 4. Based on the received position information of the multifamily housing and the received position information of terminal 4, controller 10a determines whether terminal 4 is positioned within the predetermined range from the multifamily housing. When terminal 4 is positioned within the predetermined range from the multifamily housing, communicator 10c transmits, to terminal 4, image data for calling terminal 2 of the resident of the multifamily housing performed by home-deliverer A2.

Accordingly, home-deliverer A2 can easily call residentA1 of multifamily housing 1 by transmitting the position information of the multifamily housing being the home-delivery destination and the position information of terminal 4 to information processing apparatus 10 by using terminal 4.

Although the delivery destination is the multifamily housing in the above description, the delivery destination may be a detached house. Furthermore, although the calling party is the home-deliverer in the above description, this is not limiting. The calling party may be a visitor such as a friend.

Although the embodiments have been described above with reference to the drawings, the present disclosure is not limited to such examples. It is clear that a person skilled in the art is capable of conceiving various changes and modifications within the scope of the claims. It is understood that such changes or modifications also fall within the technical scope of the present disclosure. Further, the component elements in the embodiments may be arbitrarily combined without departing from the spirit of the present disclosure.

In the above-described embodiments, the expressions "processor," "-er," "-or," and "-ar" used for the component elements may be replaced with other expressions such as "circuit (circuitry)," "assembly," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a field programmable gate array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied. The term "multifamily housing" can be replaced with an "apartment complex", a "residential complex", a "condominium", or the like. The term "holding" can be replaced with "owning", or the like. The term "position" can be replaced with a "location", or the like.

### Industrial Applicability

The present disclosure is useful for the calling system to call the resident of the multifamily housing.

### Reference Signs List

1 multifamily housing
2, 2b, 4, 21 terminal
2a, 22 calling apparatus
3 identification image
10 information processing apparatus

## Claims

1. An information processing apparatus (10), comprising:
a receiver (10c) configured to receive, from a terminal (4) of a visitor, identification information for identifying a building (1) and position information of the terminal (4) of the visitor;
a controller (10a) configured to determine whether the terminal (4) of the visitor is positioned within a predetermined range from the building (1), based on position information of the building (1) related to the identification information and the position information of the terminal (4) of the visitor; and
a transmitter (10c) configured to transmit, to the terminal (4) of the visitor, first image data for calling a terminal (2) of a dweller of the building (1), the calling being performed by the visitor, when the terminal (4) of the visitor is positioned within the predetermined range from the building (1).

2. The information processing apparatus (10) according to Claim 1, wherein, when the controller (10a) receives calling information calling the terminal (2) of the dweller from the terminal (4) of the visitor, the controller (10a) establishes a data communication path between the terminal (4) of the visitor and the terminal (2) of the dweller.

3. The information processing apparatus (10) according to Claim 2, wherein, after receiving the calling information, the controller (10a) transmits, to the terminal (2) of the dweller, second image data captured by a camera provided in the terminal (4) of the visitor, until the controller (10a) receives responding information from the terminal (2) of the dweller.

4. The information processing apparatus (10) according to Claim 3, wherein, when the controller (10a) receives the responding information from the terminal (2) of the dweller, the controller (10a) permits telephone conversation in voice between the terminal (4) of the visitor and the terminal (2) of the dweller.

5. The information processing apparatus (10) according to Claim 1, wherein
an identification image (3) representing the identification information is posted on the building (1) or a structure around the building (1), and
the receiver (10c) receives the identification information from the terminal (4) of the visitor having captured the identification image (3).

6. The information processing apparatus (10) according to Claim 1, wherein
the building (1) is a multifamily housing, and
the first image data includes an image used to input a dwelling number of the multifamily housing.

7. An information processing apparatus (10), comprising:
a transmitter (10c) configured to transmit, in response to a request from a terminal (4) of a visitor, image data of a map image to be displayed in the terminal (4) of the visitor and information for displaying, on the map image, a position image indicating a position of a building (1) to be visited by the visitor;
a receiver (10c) configured to receive, from the terminal (4) of the visitor, identification information for identifying the building (1) related to the position image selected by the visitor and position information of the terminal (4) of the visitor; and
a controller (10a) configured to determine whether the terminal (4) of the visitor is positioned within a predetermined range from the building (1) based on position information of the building (1) related to the identification information and the position information of the terminal (4) of the visitor, wherein
the transmitter (10c) transmits, to the terminal (4) of the visitor, image data for calling a terminal (2) of a dweller of the building (1), the calling to be performed by the visitor, when the terminal (4) of the visitor is positioned within the predetermined range from the building (1).

8. An information processing apparatus (10), comprising:
a transmitter (10c) configured to transmit, in response to a request from a terminal (4) of a visitor, image data of a map image to be displayed in the terminal (4) of the visitor and information for displaying, on the map image, a position image indicating a position of a building (1) to be visited by the visitor; and
a receiver (10c) configured to receive identification information for identifying the building (1) related to the position image selected by the visitor,
wherein the transmitter (10c) transmits, to the terminal (4) of the visitor, image data for calling a terminal (2) of a dweller of the building (1) corresponding to the identification information, the calling being performed by the visitor.

9. A calling method, comprising:
receiving, by an information processing apparatus (10), from a terminal (4) of a visitor, identification information for identifying a building (1) and position information of the terminal (4) of the visitor;
determining, by the information processing apparatus (10), whether the terminal (4) of the visitor is positioned within a predetermined range from the building (1) based on position information of the building (1) related to the identification information and the position information of the terminal (4) of the visitor; and
transmitting, by the information processing apparatus (10), to the terminal (4) of the visitor, image data for calling a terminal (2) of a dweller of the building (1), when the terminal (4) of the visitor is positioned within the predetermined range from the building (1), the calling being performed by the visitor.

10. A calling method, comprising:
transmitting, by an information processing apparatus (10), in response to a request from a terminal (4) of a visitor, image data of a map image to be displayed in the terminal (4) of the visitor and information for displaying, on the map image, a position image indicating a position of a building (1) to be visited by the visitor;
receiving, by the information processing apparatus (10), from the terminal (4) of the visitor, identification information for identifying the building (1) related to the position image selected by the visitor and position information of the terminal (4) of the visitor; and
determining, by the information processing apparatus (10), whether the terminal (4) of the visitor is positioned within a predetermined range from the building (1) based on position information of the building (1) related to the identification information and the position information of the terminal (4) of the visitor,
wherein image data for calling a terminal (2) of a dweller of the building (1) is transmitted to the terminal (4) of the visitor, when the terminal (4) of the visitor is positioned within the predetermined range from the building (1), the calling being performed by the visitor.

11. A calling method, comprising:
transmitting, by an information processing apparatus (10), in response to a request from a terminal (4) of a visitor, image data of a map image to be displayed in the terminal (4) of the visitor and information for displaying, on the map image, a position image indicating a position of a building (1) to be visited by the visitor;
receiving, by the information processing apparatus (10), identification information for identifying the building (1) related to the position image selected by the visitor; and
transmitting, by the information processing apparatus (10), to the terminal (4) of the visitor, image data for calling a terminal (2) of a dweller of the building (1) corresponding to the identification information, the calling being performed by the visitor.
